# FASCICULE DE BREVET EUROPEEN

(11) **EP 3 414 025 B1**
(45) Date de publication et mention de la délivrance du brevet: **10.11.2021**
(21) Numéro de dépôt: 17709914.0
(22) Date de dépôt: 08.02.2017
(51) Int. Cl.: C22B 60/02, G21F 9/28, G21F 9/30, B09C 1/02, C22B 7/00, B09B 3/00

(54) **PROCEDE POUR RALENTIR LA DISSOLUTION D'UN COMPOSE UTILISANT UN AGENT ANTI-MOUSSE**
VERFAHREN ZUR VERLANGSAMUNG DER AUFLÖSUNG EINER VERBINDUNG UNTER VERWENDUNG EINES ANTISCHAUMMITTELS
METHOD FOR SLOWING THE DISSOLUTION OF A COMPOUND USING AN ANTI-FOAMING AGENT

(30) Priorité: 10.02.2016 FR 1651059
(43) Date de publication de la demande: 19.12.2018
(73) Titulaire: Commissariat à l'Energie Atomique et aux Energies Alternatives, 75015 Paris (FR); Orano Cycle, 92400 Courbevoie (FR)
(72) Inventeur: MAGNALDO, Alastair, 30330 Connaux (FR); MARC, Philippe, 42340 Veauche (FR); OLIVIER, Pierre, 44470 Carquefou (FR)
(74) Mandataire: Brevalex
(86) Numéro de dépôt international: PCT/EP2017/052741
(87) Numéro de publication internationale: WO 2017/137433

(56) Documents cités:
- WO-A1-2015/152457
- GB-A- 2 305 538
- US-A- 2 891 840
- US-A- 2 893 863

## Description

### DOMAINE TECHNIQUE

La présente invention appartient au domaine général de la dissolution des solides et notamment au domaine de la dissolution sélective des solides typiquement mise en œuvre dans le cadre du recyclage des matières et déchets et, dans le domaine du recyclage des matières nucléaires, plus particulièrement le recyclage des combustibles nucléaires usés.

En effet, la présente invention propose un procédé pour éviter, ralentir ou arrêter la dissolution d'un composé générant un gaz lors de sa mise en contact avec une solution de dissolution et ce, éventuellement vis-à-vis de la dissolution d'un autre composé qui ne génère aucun gaz lorsque mis en contact avec cette même solution de dissolution. Le procédé selon l'invention est basé sur la présence d'au moins un agent anti-mousse dans cette solution de dissolution.

### ÉTAT DE LA TECHNIQUE ANTÉRIEURE

De nombreux procédés de recyclage ou de récupération mettent en œuvre une étape initiale durant laquelle des composés se présentant sous forme solide sont soumis à une attaque chimique provoquant de fait leur dissolution. Les étapes réalisées suite à cette dissolution peuvent consister en une extraction, telle qu'une extraction liquide-liquide, utilisant des extractions adaptés au(x) composé(s) à récupérer.

A titre d'exemples de tels procédés de recyclage ou de récupération, on peut citer le recyclage des batteries ou piles usagées contenant du lithium, du graphite et des oxydes par dissolution avec des acides forts, le recyclage du cuivre à partir d'un mélange broyé d'acier-cuivre par dissolution du cuivre en milieu nitrique (HNO₃) ou encore le recyclage ou la récupération de l'uranium via la dissolution de l'uranium, sous forme d'oxyde ou autre, en milieu nitrique ou sulfurique notamment et ce, en tête du procédé de recyclage des combustibles nucléaires usagés ou pour l'extraction de l'uranium des minerais.

Ces étapes préliminaires de dissolution font ainsi l'objet de recherches sur les mécanismes sous-jacents. En effet, les composés d'intérêt comme le lithium peuvent se présenter, préalablement au processus de recyclage, en mélange avec d'autres composés de plus faible intérêt notamment en termes de valorisation. De plus, l'utilisation d'acides forts concentrés lors de ces étapes de dissolution potentiellement fortement exothermique constitue un risque industriel puisque ces dernières peuvent mener à un dégagement gazeux important et à un risque d'explosion.

Pour cette raison, il est intéressant non seulement de favoriser des étapes d'attaque chimique durant lesquelles la dissolution des composés d'intérêt est favorisée vis-à-vis de la dissolution des autres composés également présents dans les produits et déchets à recycler mais aussi des étapes durant lesquelles le dégagement gazeux et le risque d'explosion sont contrôlés. Les documents US 2891840, US2893863 et GB2305538 montrent comment éviter la formation d'une atmosphère explosive due à la formation de gaz lors de la dissolution. La demande internationale WO 2015/152457 propose un procédé pour séparer et récupérer l'argent et l'étain à partir d'un schlamm anodique, comprenant les étapes consistant à mettre un schlamm anodique dans une solution d'acide fort et agiter l'ensemble en ajoutant un agent anti-mousse.

A noter cependant que, dans le cadre des recherches effectuées sur les étapes de dissolution, la nucléation de bulles sur des surfaces solides mue par une force chimique, ce qui est le cas lors d'une dissolution, a été peu étudiée. Quand elle a fait l'objet d'études, une possible action sur celle-ci par des polluants de la solution a été proposée **[1].** En effet, dans ce travail, il a été considéré que la présence de cristaux de carbonate de calcium sur les bouteilles pourrait expliquer l'expulsion d'une partie de la boisson entraînée par la mousse i.e. le gerbage des boissons gazeuses. D'autres études, portant sur la nucléation de gaz sans apport d'agents extérieurs montrent que le gaz pourrait lui-même être son propre agent de surface **[2].**

Par contre, l'utilisation d'un agent tensioactif est bien documentée dans le domaine des transferts de chaleur et de l'ébullition de vapeur d'eau sur des surfaces chaudes. Ce domaine technique n'est, cependant, en rien comparable à celui de la présente invention qui concerne la dissolution des solides et donc le transfert et le transport de matière.

De même, des expériences classiques d'électrolyse de l'eau qui consistent en une réaction produisant des gaz sur un support solide en milieu aqueux se font par ajout d'un tensioactif cationique qu'est le bromure d'hexadécyltriméthylammonium sans réellement connaître la physique de l'influence de ce dernier **[3].** De plus et principalement, les réactions étudiées à savoir la réaction de dégagement d'hydrogène (HER pour « Hydrogen Evolution Reaction ») et la réaction de dégagement d'oxygène (OER pour « Oxygen Evolution Reaction ») ne constituent pas des réactions de dissolution.

Taha décrit le rôle d'agents tensioactifs non ionique (Triton X-100^{®}) ou cationique (bromure de cétyltriméthylammonium) sur le transfert de masse lors de réactions électrochimiques **[4].** Ces réactions sont des réactions électrochimiques sur une surface solide avec production de gaz et se distinguent donc clairement d'une réaction de dissolution.

Plusieurs brevets ou demandes de brevet font référence à l'apport d'agents contrôlant la dissolution **[5]** ou **[6].** Ainsi, dans la demande internationale WO 2008/130592 **[5],** un tel agent peut être un agent tensioactif tel qu'un agent tensioactif non ionique utilisé pour contrôler la dissolution d'un composé réactionnel. En particulier, lorsque ce composé se trouve sous forme de particules, le tensioactif facilite la dispersion de ces dernières dans la solution réactive. Ainsi, le but recherché dans la demande internationale WO 2008/130592 **[5]** est la production de gaz par la dispersion du solide à dissoudre, ceci afin d'augmenter la surface d'attaque, ou la dispersion de solides autres pour promouvoir la nucléation de gaz ailleurs que sur les solides à dissoudre. La demande de brevet GB 2 264 112 **[6]** propose une composition comprenant un matériel à base de lithium ou de calcium se présentant sous forme de particules compactées, ladite composition étant apte à réagir avec de l'eau pour générer de l'hydrogène. Dans cette composition, on peut également trouver un agent tensioactif et notamment un agent tensioactif anionique comme le dodécylsulfate de sodium ou le dodécylbenzènesulfonate sodique. Un tel agent tensioactif est utilisé pour modifier la taille et la densité des bulles d'hydrogène.

Du fait de l'intérêt grandissant quant à la récupération des composés d'intérêt dans le cadre d'un recyclage, les inventeurs se sont donc fixé pour but de proposer un procédé permettant, d'une part, d'éviter, ralentir ou arrêter la dissolution de certains composés à intérêt plus faible, notamment dans le cadre du recyclage de déchets par attaque chimique et, d'autre part, de contrôler le dégagement gazeux et de limiter les risques associés à un tel dégagement gazeux durant une telle attaque chimique.

### EXPOSÉ DE L'INVENTION

Ce but et d'autres encore sont atteints par la présente invention qui propose un procédé pour éviter, ralentir ou arrêter la dissolution d'un composé solide lors d'une attaque chimique générant des gaz, par utilisation d'un additif particulier à savoir un agent anti-mousse.

En effet, alors que, selon l'état de la technique, la formation de bulles de gaz dans les procédés impliquant une dissolution est la seule conséquence de cette dernière, les inventeurs ont montré, par leurs travaux expérimentaux et des calculs numériques, que la formation de bulles de gaz est aussi une condition nécessaire à la dissolution et, plus particulièrement, que les cinétiques de dissolution sont régies, de manière importante, par le dégazage des espèces gazeuses.

Sans vouloir être limité à une quelconque théorie et sur la base du cas de la dissolution de l'UO₂ en milieu nitrique, les inventeurs ont montré que cette dernière nécessite une réaction catalysée et donc la présence d'un catalyseur sous la forme d'une espèce chimique près de la surface à dissoudre. Cette espèce catalytique est aussi un produit de la réaction de dissolution. Afin que la réaction catalytique puisse être prédominante, il est nécessaire qu'elle soit accumulée dans des failles du solide en cours de dissolution ; la couche limite de diffusion qui s'établit naturellement entre la surface en train de se dissoudre et la solution ne suffit pas à accumuler le catalyseur. Cependant, sans renouvellement de solution dans ces failles, l'acide qui est également nécessaire à toute réaction, est rapidement consommé et la réaction s'étouffe d'elle-même. Lorsque les conditions géométriques de la faille sont suffisantes, une bulle de gaz composée de produits de la réaction peut être produite. Sa nucléation, croissance et dégazage permettent ainsi le renouvellement des solutions dans la faille pour initier un nouveau cycle de dissolution.

La démonstration expérimentale de ce processus a conduit les inventeurs à proposer une méthode pour cibler très spécifiquement les bulles de gaz et inhiber leur croissance ultérieure avec, comme conséquence directe, un ralentissement voire une inhibition de la dissolution. Plus particulièrement, les inventeurs ont cherché à influer sur la réaction de dissolution qui produit des gaz en perturbant la croissance des bulles de gaz, notamment en réduisant la diffusion des gaz dissous vers des bulles en croissance et ce, sans aucun effet sur les autres réactions de dissolution ne produisant pas de gaz.

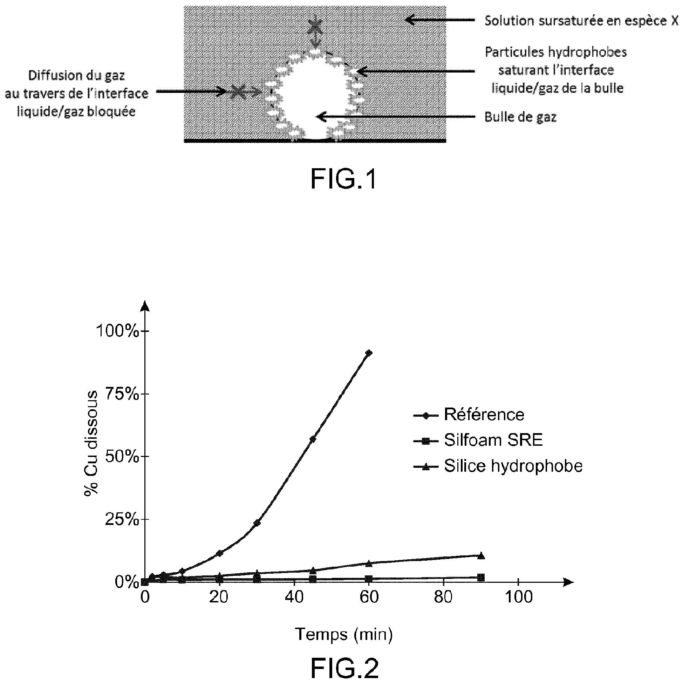

Dans ce but, les travaux des inventeurs ont permis de mettre en évidence que les agents anti-mousse du type particules solides hydrophobes, huiles silicones et huiles polaires constituent de bons candidats pour ralentir voire inhiber la dissolution de solides produisant des gaz de dissolution. Un tel agent anti-mousse s'adsorbe, de façon spécifique, par des interactions hydrophobes, sur les bulles qui présentent les surfaces les plus hydrophobes dans la solution. Dans l'état actuel des connaissances des inventeurs, cette adsorption empêche ou réduit tout apport ultérieur de gaz et donc interrompt le cycle de production des bulles, comme illustré à la Figure 1.

En d'autres termes, lors d'une étape de dissolution, la solution de dissolution (solution A) dissout un premier composé solide (composé B) dans un mélange comprenant le composé B et éventuellement au moins un autre composé solide (composé C). La dissolution du composé B dans la solution A produit ou relâche au moins un gaz (gaz G), ce qui n'est pas le cas du composé C. Selon la nature du gaz G notamment sa solubilité dans la solution A, le gaz G est appelé à nucléer afin de dégazer de la solution A sous la forme de bulles. L'invention consiste à rajouter, à la solution A, un agent anti-mousse particulier (agent H) qui réduit ou empêche tout apport ultérieur de gaz dans les bulles existantes. L'ajout de l'agent H dans la solution A interrompt alors la production de bulles. Les travaux des inventeurs ont montré que l'arrêt de la production de bulles implique aussi le ralentissement voire l'arrêt de la dissolution du composé B dans la solution A et ce, sans aucune conséquence sur le comportement à la dissolution du composé C dans la solution A.

De plus, lorsque le composé B est mis à dissoudre dans une autre solution différente de la solution A selon un mécanisme réactionnel qui n'implique aucune production gazeuse, l'ajout de l'agent H est sans effet particulier. Lorsque le composé C est augmenté en proportion par rapport au composé B dans la solution A, l'effet de l'ajout de l'agent H est préservé. Ainsi, l'effet de l'agent H est spécifique d'une dissolution produisant des bulles de gaz.

Des explications ci-dessus et des résultats expérimentaux ci-après, il est évident que la présente invention s'applique non seulement à tout procédé de dissolution dans lequel la dissolution d'un composé entraîne la production d'au moins un gaz de dissolution, mais aussi à tout procédé de dissolution mettant en œuvre un mélange comprenant des éléments solides dont la dissolution génère ou non des gaz de dissolution.

Par conséquent, la présente invention concerne un procédé pour éviter, ralentir ou arrêter la dissolution d'un composé solide dans une solution de dissolution dans laquelle ledit composé solide se dissout en générant au moins un composé gazeux, ladite dissolution étant évitée, ralentie ou arrêtée par l'ajout, dans ladite solution de dissolution, d'au moins un agent anti-mousse choisi dans le groupe constitué par les particules solides hydrophobes, les huiles silicones, les huiles polaires et leurs mélanges.

Dans le cadre du procédé selon la présente invention, l'ajout du ou des agent(s) anti-mousse dans la solution de dissolution est réalisé avant la mise en contact de cette solution avec le composé dont on souhaite éviter, ralentir ou arrêter la dissolution.

Dans un mode de réalisation particulier de l'invention, le composé solide dont on souhaite éviter, ralentir ou arrêter la dissolution est présent en mélange avec un second composé qui se dissout dans ladite solution de dissolution sans générer aucun composé gazeux, moyennant quoi l'ajout de l'agent anti-mousse dans la solution de dissolution avant à la mise en contact du mélange avec la solution de dissolution évite, ralentit ou arrête la dissolution dudit composé solide et permet la dissolution sélective du second composé.

Par « éviter, ralentir ou arrêter », on entend dans le cadre de la présente invention que la dissolution du composé est évitée, ralentie voire inhibée en présence d'au moins un agent anti-mousse tel que défini dans la présente invention lorsque comparée à la dissolution, dans des conditions identiques notamment en terme de quantité du composé soumis à la dissolution et de nature de la solution de dissolution, mais en absence dudit au moins un agent anti-mousse.

Par « dissolution sélective », on entend dans le cadre de la présente invention que la dissolution du second composé (ou composé C) est favorisée vis-à-vis de celle du composé dont la dissolution génère au moins un composé gazeux (composé B ou premier composé). Plus particulièrement et comme précédemment expliqué, l'ajout de l'agent anti-mousse n'a aucun effet sur la dissolution du second composé, alors même que la dissolution du premier composé est ralentie.

Aussi, dans des conditions identiques notamment en terme de nature (mêmes composés contenus dans le mélange dans les mêmes quantités) et de quantité de mélange soumis à la dissolution et de nature de la solution de dissolution, la quantité de premier composé dissoute au temps t de mise en contact avec la solution de dissolution en présence d'au moins un agent anti-mousse est inférieure à la quantité dissoute au même temps t en absence dudit agent anti-mousse alors que la quantité du second composé dissoute au temps t de mise en contact est identique ou du moins non significativement différente en présence et en absence dudit agent anti-mousse. Il est évident que le temps t doit être choisi avant que la dissolution du premier composé ou celle du second composé n'atteigne un palier.

En d'autres termes, dans des conditions identiques notamment telles que précédemment définies, la durée pour obtenir une dissolution totale ou maximale pour le premier composé en présence d'un agent anti-mousse est supérieure à la durée pour obtenir une dissolution totale ou maximale pour ce même composé sans agent anti-mousse, alors que la durée pour obtenir une dissolution totale ou maximale pour le second composé est identique ou du moins non significativement différente en présence et en absence dudit agent anti-mousse.

En d'autres termes encore, dans des conditions identiques notamment telles que précédemment définies, la vitesse initiale de dissolution pour le premier composé en présence d'un agent anti-mousse est inférieure à la vitesse initiale de dissolution pour ce même composé sans agent anti-mousse, alors que la vitesse initiale de dissolution pour le second composé est identique ou du moins non significativement différente en présence et en absence dudit agent anti-mousse.

L'homme du métier sait déterminer, sans effort inventif, par des techniques classiques dans le domaine de la dissolution telles que celles mises en œuvre dans la partie expérimentale ci-après, la quantité d'un composé dissoute, la durée pour obtenir une dissolution totale ou maximale d'un composé et la vitesse initiale de dissolution d'un composé.

La caractéristique essentielle de la présente invention réside dans l'utilisation d'au moins un agent anti-mousse choisi dans le groupe constitué par les particules solides hydrophobes, les huiles silicone, les huiles polaires et leurs mélanges. Ainsi, il peut être utilisé soit un seul agent anti-mousse, soit un mélange d'au moins deux agents anti-mousse différents. Lorsqu'un mélange de plusieurs agents anti-mousse différents est utilisé, ce mélange peut typiquement contenir deux, trois, quatre ou cinq agents anti-mousse, ces agents anti-mousse pouvant appartenir à une ou plusieurs des familles choisie(s) dans le groupe constitué par les particules solides hydrophobes, les huiles silicone et les huiles polaires.

Par « agent anti-mousse », on entend un additif chimique qui réduit voire empêche la formation de mousse ou qui rend instables les ingrédients d'une mousse déjà existante. A noter que les expressions « agent anti-mousse », « agent anti-moussant » et « agent à action anti-moussante » sont équivalentes et peuvent être utilisées de façon interchangeable dans la présente. De plus, dans le cadre de la présente invention, l'agent anti-mousse mis en œuvre est un agent anti-mousse particulier puisque choisi dans le groupe constitué par les particules solides hydrophobes, les huiles silicone, les huiles polaires et leurs mélanges.

Par « particules solides hydrophobes », on entend des particules solides qui, lorsque placées dans de l'eau à température ambiante, ont la capacité de s'attirer et de se maintenir ensemble sous forme d'un agrégat permettant de fait de minimiser leur surface exposée à l'eau. On peut utiliser, dans la présente invention, des particules solides hydrophobes de nature identique ou des mélanges de particules solides hydrophobes de nature différente.

Dans la présente invention, les particules solides hydrophobes peuvent être de forme sphérique ou parfaitement quelconque, et présenter une distribution de taille monodisperse ou polydisperse. Avantageusement, les particules solides hydrophobes telles que mises en œuvre dans le cadre de la présente invention ont des dimensions caractéristiques comprises entre 1 nm et 200 µm et notamment entre 2 nm et 100 µm. Ainsi, les particules solides hydrophobes peuvent être (i) des nanoparticules dont les dimensions caractéristiques sont comprises entre 2 nm et 800 nm et notamment entre 4 nm et 600 nm ou encore (ii) des microparticules dont les dimensions caractéristiques sont comprises entre 1 µm et 100 µm et notamment entre 2 µm et 50 µm.

Les particules solides hydrophobes peuvent être naturellement hydrophobes. Il peut s'agir de particules solides entièrement minérales (i.e. entièrement inorganiques) notamment en aluminate ou en titanate.

En variante, les particules solides mises en œuvre dans l'invention ont pu être rendues hydrophobes suite à un traitement ou encore un tel traitement a permis d'accroître le caractère hydrophobe des particules solides mises en œuvre. En d'autres termes, ces particules solides sont des particules solides typiquement minérales, fonctionnalisées par des groupements organiques hydrophobes. L'homme du métier connaît différentes techniques utilisables pour une telle fonctionnalisation. Les techniques les plus utilisées peuvent être divisées en deux catégories: la première est un traitement physique, de type enrobage ou enduction, durant lequel les groupements hydrophobes ou des molécules les comprenant sont déposé(e)s à la surface des particules, alors que la deuxième catégorie comprend les traitements chimiques impliquant un greffage moléculaire et consistant à fixer, à la surface des particules, via des liaisons covalentes, les groupements hydrophobes ou des molécules les comprenant. Un exemple caractéristique d'un tel greffage est une silanisation.

Parmi les particules solides minérales utilisables, on peut citer des particules en acide phosphotungstique, en ferrocyanure de nickel, en oxyde, en hydroxyde, en carbonate, en sulfate, en nitrate et/ou en oxalate et/ou en titanate d'une ou plusieurs (par exemple, un oxyde mixte aluminosilicaté) espèce(s) choisie(s) parmi les métaux alcalins (par exemple Na₂O.Al₂O₃.4SiO₂), alcalino-terreux (par exemple CaO.Fe₂O₃, CaCO₃, BaSO₄, BaTiO₃, Ca₃(PO₄)₂), de transition (par exemple TiO₂, Fe₂O₃, ZrO₂, MnO₂), et des métalloïdes (par exemple SiO₂). De telles particules solides sont notamment disponibles chez ACROS ORGANICS. Un exemple particulier de telles particules solides consiste en des particules de silice comme des particules en silice fumée, en silice précipitée ou encore obtenues par un procédé sol-gel.

Par « groupement organique hydrophobe », on entend, dans le cadre de la présente invention, une fonction chimique non polaire ou apolaire qui est complètement dissoute à une concentration supérieure ou égale à 5% en poids et à une température de 25°C dans un solvant hydrophobe. Avantageusement, ledit groupement hydrophobe comprend de 3 à 50 atomes de carbone, notamment de 6 à 30 atomes de carbone et, en particulier, de 8 à 20 atomes de carbone. Plus particulièrement, ledit groupement hydrophobe est choisi dans le groupe comprenant :
- un alkyle, linéaire, ramifié ou cyclique, en C3 à C50, notamment en C6 à C30 et, en particulier, en C10 à C20 pouvant comporter éventuellement au moins une insaturation (double ou triple liaison), au moins un hétéroatome tel que O, N, S, Si, F ou Cl et/ou au moins une substitution,
- un aryle en C3 à C50, notamment en C6 à C30 et, en particulier, en C10 à C20 pouvant comporter éventuellement au moins une substitution, cette substitution peut être un alkyle linéaire, branché ou cyclique en C3 à C50, notamment en C6 à C30 et, en particulier, en C10 à C20 qui peut éventuellement comprendre au moins une insaturation (double ou triple liaison) et/ou au moins un hétéroatome tel que O, N, S, Si, F ou Cl et/ou au moins une substitution,
- les alkylaryles ou arylalkyles en C6 à C50, notamment en C6 à C30 et, en particulier, en C6 à C20 pouvant comporter éventuellement au moins une insaturation et/ou au moins un hétéroatome tel que O, N, S, Si, F ou Cl et/ou au moins une substitution et
- un (poly)cycle en C6 à C50, notamment en C6 à C30 et, en particulier, en C10 à C20 pouvant comporter éventuellement au moins une insaturation (double ou triple liaison), au moins un hétéroatome tel que O, N, S, Si, F ou Cl et/ou au moins une substitution.

Ladite substitution est avantageusement une substitution par un alkyle en C1 à C6, par un thiol, par une amine et/ou par un ou plusieurs halogène(s) et notamment par un ou plusieurs fluor(s).

Par « huile silicone », on entend un polymère de haut poids moléculaire contenant des unités siloxanes et des groupements hydrocarbyles. Typiquement, les unités siloxanes d'une huile silicone répondent à la formule générale ―Si-O(R)(R')]ₙ- dans laquelle les groupements R et R', identiques ou différents, représentent un groupement alkyle ou un groupement aryle et n est un nombre entier compris entre 20 et 2000. A titre d'exemples particuliers de groupements R et R', on peut citer un méthyle, un éthyle, un propyle, un isobutyle et un phényle. Une huile silicone avantageusement mise en œuvre dans le cadre de la présente invention est un polydiméthylsiloxane dont les extrémités sont bloquées par des groupements triméthylsilyles.

Par « huile polaire », on entend une huile hydrocarbonée comportant une fonction ou plusieurs fonctions, identiques ou différentes, choisie(s) parmi les fonctions ester, éther, acide, alcool ou leurs mélanges, comme les alcools gras et acides gras et leurs esters. A titre d'exemples d'huile polaire, on peut citer :
- les huiles végétales hydrocarbonées, telles que les triglycérides liquides d'acides gras en C7-C22, comme les triglycérides des acides heptanoïque ou octanoïque ;
- les esters liquides différents des triglycérides, notamment des triglycérides ci-dessus, et issus d'acide carboxylique en C3-C30 et d'alcool en C1-C30, l'un au moins de l'acide ou de l'alcool étant ramifié ou insaturé et l'un au moins de l'acide ou de l'alcool comportant plus de 6 atomes de carbone ;
- les esters d'acides di- ou tricarboxyliques en C4-C22 et d'alcools en C1-C22 et les esters d'acides mono-, di- ou tricarboxyliques et d'alcools di-, tri-, tétra- ou pentahydroxy en C2-C26, lesdits acides et alcools étant avantageusement saturés ;
- les esters d'acide aromatique en C7-C30 et d'alcool en C1-C30 ;
- les alcools gras à chaîne carbonée ramifiée et/ou insaturée en C12-C26 comme l'alcool oléique, l'alcool linoléique ou linolénique, l'alcool isostéarique ou l'octyldodécanol ;
- les acides gras en C12-C26 à chaîne carbonée ramifiée et/ou insaturée tels que l'acide oléique, l'acide linoléique, l'acide linolénique, ou l'acide isostéarique ; et
- leurs mélanges.

Dans un mode de mise en œuvre particulier de la présente invention, l'agent anti-mousse comprend des composantes solides compatibles avec les solutions de dissolution mises en œuvre. Ainsi, l'agent anti-mousse comprend au moins des particules solides hydrophobes telles que précédemment définies.

Plus particulièrement, l'agent anti-mousse mis en œuvre dans le cadre de la présente invention est une dispersion de particules solides hydrophobes telles que précédemment définies dans une huile silicone telle que précédemment définie. Plus particulièrement encore, cet agent anti-mousse est une dispersion de microparticules de silice rendues hydrophobes par silanisation dans une huile silicone telle que précédemment définie. Un tel agent est notamment disponible chez WACKER CHEMIE AG ou FLOEGER.

Le ou les agent(s) anti-mousse sont utilisé(s) dans le cadre de la présente invention en une quantité totale comprise entre 0,01 et 30 g par litre de solution de dissolution, notamment comprise entre 0,02 et 10 g par litre de solution de dissolution et, en particulier, entre 0,05 et 5 g par litre de solution de dissolution.

La solution de dissolution mise en œuvre dans le cadre de la présente invention est une solution adaptée pour réduire ou oxyder et faire passer en solution au moins un composé avec dégagement gazeux (premier mode de réalisation de l'invention) ou au moins deux composés différents présents dans le mélange mis en contact avec cette dernière, la dissolution d'un seul de ces deux composés entraînant un dégagement gazeux (second mode de réalisation de l'invention). L'homme du métier saura choisir, sur la base de ses connaissances et sans effort inventif, la solution de dissolution la mieux adaptée en fonction du composé soumis à la dissolution ou du mélange soumis à une dissolution et de la nature du ou des composé(s) dont on souhaite favoriser la dissolution aux dépens de celle d'un ou de plusieurs autre(s) composé(s).

Ainsi, la solution de dissolution susceptible d'être mise en œuvre dans le cadre de la présente invention peut être une solution acide voire fortement acide ou une solution alcaline voire fortement alcaline.

Par « fortement acide », on entend une solution de dissolution notamment aqueuse dont le pH est inférieur ou égal à 5, notamment inférieur à 4 et, en particulier, inférieur à 3. Une solution de dissolution acide comprend un ou plusieurs acides minéraux. A titre d'exemples, une solution de dissolution acide est notamment choisie parmi l'acide chlorhydrique (HCl), l'acide nitrique (HNO₃), l'acide fluorhydrique (HF), l'acide sulfurique (H₂SO₄), l'acide phosphorique (H₃PO₄), leurs solutions aqueuses et leurs mélanges. Les acides ou leurs mélanges utilisés dans la solution de dissolution acide voire fortement acide peuvent se présenter sous forme d'acides concentrés.

De plus, à titre d'exemples particuliers de mélanges de dissolution acides, on peut citer (i) un mélange de HNO₃ éventuellement concentré et de HF ou (ii) un mélange de HNO₃ éventuellement concentré et de HCl, les proportions étant quelconques dans ces différents mélanges.

Par « fortement alcaline », on entend une solution notamment aqueuse dont le pH est supérieur à 9, notamment supérieur à 10 et, en particulier, supérieur à 11. L'expression « fortement alcaline » est équivalente à et interchangeable avec l'expression « fortement basique ». Une solution de dissolution alcaline comprend une ou plusieurs bases minérales. A titre d'exemples, une solution de dissolution alcaline est notamment choisie parmi l'hydroxyde de sodium (NaOH), l'hydroxyde de potassium (KOH), l'hydroxyde de calcium (Ca(OH)₂), l'hydroxyde de lithium (LiOH), l'hydroxyde de césium (CsOH), leurs solutions aqueuses et leurs mélanges.

La solution de dissolution peut être une solution oxydante ou réductrice et ce, en fonction des composés à dissoudre. Ainsi, elle peut contenir au moins un agent oxydant ou au moins un agent réducteur. A noter que les acides minéraux et les bases minérales contenues dans la solution de dissolution peuvent faire fonction d'agents oxydants ou d'agents réducteurs. En variante, il peut être nécessaire d'ajouter d'autres agents oxydants ou réducteurs à la solution de dissolution mise en œuvre.

L'homme du métier connaît différentes façons de préparer de telles solutions de dissolution soit en diluant ou en mélangeant des compositions commerciales existantes, soit en les préparant de façon extemporanée. L'homme du métier connaît également différentes façons pour ajuster le pH jusqu'à la valeur souhaitée, si nécessaire, notamment en utilisant des additifs permettant de tamponner la ou les solution(s).

Comme précédemment exposé, l'ajout du ou des agent(s) anti-mousse dans la solution de dissolution est réalisée avant la mise en contact de cette solution avec le composé ou le mélange de composés tel que précédemment défini. Lorsque plusieurs agents anti-mousse sont mis en œuvre, ces derniers peuvent être ajoutés à la solution de dissolution, les uns après les autres, par groupe ou encore en une fois. Suite à l'addition du ou des agent(s) anti-mousse dans la solution de dissolution, cette dernière peut être soumise à une agitation de façon à homogénéiser la solution résultante. L'agitation peut être réalisée de manière classique, par exemple, à l'aide d'un agitateur, d'un agitateur magnétique, d'un barreau magnétique, d'un bain à ultrasons ou d'un homogénéisateur.

Dans le cadre de l'invention, le composé dont on souhaite éviter, ralentir ou arrêter la dissolution qui génère au moins un composé gazeux est un élément métallique. A titre d'exemples de tels éléments métalliques, on peut citer un élément choisi parmi le mercure, l'or, le platine, le plomb, l'indium, le gallium, l'aluminium, le bismuth, l'étain, le cadmium, le cuivre, l'arsenic, le nickel, le zinc, le titane, le cobalt, le manganèse, le palladium, le radium, le ruthénium, le thorium, l'uranium, le plutonium, l'actinium, l'ytterbium, l'erbium, le terbium, le gadolinium, l'europium, le néodyme, le praséodyme, le cérium, le césium, le strontium et le lanthane. Dans le mélange à dissoudre selon le procédé de l'invention, cet élément métallique peut être sous une forme métallique (degré d'oxydation de zéro), sous une forme oxydée ou encore sous forme d'un alliage.

Le composé dont on souhaite éviter, ralentir ou arrêter la dissolution peut se présenter sous forme compacte telle qu'un dépôt ou une couche ou sous forme particulaire. Il faut entendre par particules non seulement des éléments de petite taille i.e. taille de l'ordre ou inférieure au millimètre mais aussi des éléments de plus grande taille comme des morceaux de plusieurs centimètres. Le composé se présentant sous forme particulaire peut être le résultat d'une étape préalable de broyage d'un matériau compact.

Avantageusement, le mélange soumis à une dissolution dans le cadre de la présente invention est un rebut de fabrication ou produit solide provenant de la fabrication des éléments combustibles nucléaires, un produit solide provenant du traitement des combustibles nucléaires irradiés, une terre contaminée, un déchet solide d'équipements électriques ou électroniques ou un déchet industriel ou encore des composés solides issu du traitement des piles et batteries usagées, du traitement des aimants, du traitement minier ou un minerai.

A titre d'exemples plus particuliers d'utilisation du procédé selon la présente invention, on peut citer :
- la dissolution d'aluminium ou d'étain métallique. En effet, la mise en contact d'aluminium ou d'étain métallique avec une solution de dissolution du type acide fort comme une solution d'acide nitrique ou d'acide chlorhydrique peut mener à un dégagement important d'hydrogène et des risques d'explosion. En effet, cette réaction de dissolution est fortement exothermique et un effet d'emballement de réaction est observé. L'ajout d'un agent anti-mousse ralentissant la dissolution de ces composés est un moyen de protection contre ce risque ;
- le dégraissage, le nettoyage ou le polissage de métaux notamment par des solutions corrosives. En effet, la production de bulles de gaz lors de la dissolution s'accompagne d'une formation progressive de failles qui sont des lieux privilégiés de la dissolution. L'utilisation d'acides forts, notamment pour le dégraissage, le nettoyage ou le polissage de métaux ne peut alors être envisagé, sauf en réduisant grandement les concentrations et donc les cinétiques. L'inhibition de la production de bulles de gaz via un agent anti-mousse et donc de la dissolution par les failles permet de remédier à ces limitations. Par exemple, un procédé fréquemment utilisé dans l'industrie hydrométallurgique est le nettoyage de pièces par une trempe acide (notamment, le nettoyage des pièces de monnaie en cupro-nickel ou maillechort par l'acide nitrique). Cette trempe a pour effet de dissoudre les oxydes à la surface des pièces. L'inhibition dont est l'objet ce brevet, permet effectivement de ne cibler que la dissolution de l'oxyde et de réduire l'impact sur les parties métalliques.

De plus, le mélange solide soumis à une dissolution durant le procédé selon la présente invention peut être tout mélange comprenant au moins un premier composé qui produit au moins un composé gazeux lors de sa dissolution dans ladite solution de dissolution et au moins un second composé dont la dissolution dans la solution de dissolution telle que précédemment définie ne génère aucun composé gazeux.

Dans le cadre de l'invention, la dissolution du mélange solide suite au procédé selon l'invention peut être totale : l'ensemble des constituants du mélange se retrouvent en solution suite à ce procédé. En variante, la dissolution peut être partielle : en fin de procédé, certains des constituants et notamment le ou les premier(s) composé(s) de ce mélange ne sont pas ou sont partiellement dissous et restent sous forme solide, alors que d'autres constituants sont complètement dissous.

Ce mélange peut présenter d'autres composés en plus des premier et second composés tels que définis dans la présente. Parmi ces autres composés, peuvent se trouver un ou plusieurs composé(s) ne se dissolvant pas dans la solution de dissolution mise en œuvre, un ou plusieurs composé(s) se dissolvant dans cette solution de dissolution sans générer de gaz et/ou un ou plusieurs composé(s) dont la dissolution dans cette solution de dissolution produit au moins un gaz. Ainsi, si le mélange mis en œuvre comprend plusieurs composés dont la dissolution dans la solution de dissolution produit des composés gazeux, il est évident que la présence d'un ou plusieurs agent(s) anti-mousse conformément au procédé selon l'invention ralentira sélectivement la dissolution de l'ensemble de tels composés, la dissolution du ou des autres composé(s) ne générant pas de gaz étant sélectivement favorisée.

Le mélange à dissoudre peut se présenter sous forme compacte telle qu'un dépôt ou une couche dans lequel/laquelle on trouve le premier et le second composés et éventuellement un ou plusieurs autre(s) composé(s). En variante, le mélange à dissoudre peut se présenter sous forme particulaire avec des particules essentiellement constituées du premier composé avec éventuellement au moins un autre composé et des particules essentiellement constituées du second composé avec éventuellement au moins un autre composé et/ou des particules comprenant le premier composé et le second composé avec éventuellement au moins un autre composé. Il faut entendre par particules non seulement des éléments de petite taille i.e. taille de l'ordre ou inférieure au millimètre mais aussi des éléments de plus grande taille comme des morceaux de plusieurs centimètres. Le mélange à dissoudre se présentant sous forme particulaire peut être le résultat d'une étape préalable de broyage d'un matériau compact.

Avantageusement, le mélange soumis à une dissolution dans le cadre de la présente invention est un rebut de fabrication ou produit solide provenant de la fabrication des éléments combustibles nucléaires, un produit solide provenant du traitement des combustibles nucléaires irradiés, une terre contaminée, un déchet solide d'équipements électriques ou électroniques, un déchet industriel, des composés solides issus du traitement des piles et batteries usagées, du traitement des aimants, du traitement minier ou encore un minerai.

En particulier, le premier et le second composés tels que précédemment définis et présents dans le mélange à dissoudre sont des métaux, des oxydes ou des composés intermétalliques. A titre d'exemples, on peut citer un élément choisi parmi le mercure, l'or, le platine, le plomb, l'indium, le gallium, l'aluminium, le bismuth, l'étain, le cadmium, le cuivre, l'arsenic, le nickel, le zinc, le titane, le cobalt, le manganèse, le palladium, le radium, le ruthénium, le thorium, l'uranium, le plutonium, l'actinium, l'ytterbium, l'erbium, le terbium, le gadolinium, l'europium, le néodyme, le praséodyme, le cérium, le césium, le strontium et le lanthane. Dans le mélange à dissoudre selon le procédé de l'invention, cet élément peut être sous une forme métallique (degré d'oxydation de zéro), sous une forme oxydée ou encore sous forme d'un alliage. Il est clair qu'en fonction de la solution de dissolution mise en œuvre, un quelconque élément choisi dans la liste ci-dessus pourra se comporter soit comme un premier composé tel que précédemment défini, soit comme un second composé tel que précédemment défini.

A titre d'exemples du procédé selon la présente invention mettant en œuvre au moins un premier composé et au moins un second composé tels que précédemment définis (i.e. procédé de dissolution sélective), on peut citer :
- le recyclage des batteries ou piles usagées contenant des premiers composés qui sont des métaux, des oxydes ou des composés intermétalliques que l'on souhaite séparer des autres solides par une dissolution sélective. Ces premiers composés contiennent des métaux, oxydes métalliques ou composés intermétalliques constitués de nickel, terres rares (lanthane, cérium, néodyme, praséodyme), cobalt, manganèse et aluminium, qui peuvent se dissoudre en produisant des gaz de dissolution, alors que les seconds composés contiennent l'électrolyte et les matières de structure dont les électrodes les séparateurs et les grilles, souvent composés de métaux et alliages non solubles ;
- le recyclage et traitement des aimants permanents : des composés solides issus du traitement des aimants permanents à base de terres rares souvent composés d'alliages métalliques comprenant des métaux, oxydables dans certaines conditions, en milieu aqueux acide. Les premiers composés sont des métaux ou alliages métalliques de terres rares, solubles par oxydation. Les seconds composés sont les éléments de structure et des composés entrant dans la composition globale des aimants dont la matrice métallique jouant un rôle de liant entre les grains d'alliages métalliques. La solution de dissolution avantageusement mise en œuvre étant une solution aqueuse contenant de 1 M à 8 M et en particulier d'environ 3 M d'acide nitrique ou sulfurique, ou leur mélange, avec un agent oxydant ;
- le traitement des minerais et résidus miniers constitués de mélanges de composés d'oxydes métalliques. Les premiers composés contiennent des éléments métalliques oxydables en milieu aqueux oxydant, les seconds composés des éléments métalliques non-oxydables. La solution de dissolution avantageusement mise en œuvre étant une solution aqueuse contenant de 1 M à 8 M et en particulier d'environ 3 M d'acide nitrique ou sulfurique, ou leur mélange, avec un agent oxydant.

Dans le cadre du procédé selon l'invention, la mise en contact entre le composé dont on souhaite éviter, ralentir ou arrêter la dissolution, le mélange à dissoudre, la solution de dissolution et le ou les agent(s) anti-mousse peut être réalisée de différentes façons en mode continu ou discontinu (« batch »). Par exemple, on peut faire circuler en continu une solution de dissolution contenant le ou les agent(s) anti-mousse sur les dépôts et/ou couches à dissoudre, en rinçant les parois des appareils et tuyauteries avec cette solution. Dans le cas des dépôts situés au fond de structures telles que des appareils, on peut remplir ces structures avec la solution de dissolution contenant le ou les agent(s) anti-mousse et la laisser agir le temps nécessaire à la dissolution des solides. On peut également introduire le composé dont on souhaite éviter, ralentir ou arrêter la dissolution ou le mélange à dissoudre dans un récipient, de type cuve, préalablement rempli de solution de dissolution contenant le ou les agent(s) anti-mousse.

Lors de la mise en contact, la solution de dissolution contenant le ou les agent(s) anti-mousse peut être soumise à une agitation en utilisant un moyen classique connu de l'homme du métier. Il convient de noter que l'homme du métier connaît la température à laquelle la mise en contact entre la solution de dissolution contenant le ou les agent(s) anti-mousse et le composé dont on souhaite ralentir la dissolution (premier mode de réalisation de l'invention) ou le mélange à dissoudre (second mode de réalisation de l'invention) doit s'effectuer et ce, en fonction du ou des composé(s) à dissoudre et de la solution de dissolution utilisée. La température de fonctionnement du procédé n'a pas d'impact sur le rôle de l'anti-mousse.

D'autres caractéristiques et avantages de la présente invention apparaîtront encore à l'homme du métier à la lecture des exemples ci-dessous donnés à titre illustratif et non limitatif, en référence aux figures annexées.

### BRÈVE DESCRIPTION DES DESSINS

La Figure 1 est une schématisation de l'action des agents anti-mousse pour inhiber le développement des bulles de gaz.
La Figure 2 présente les effets comparés de l'ajout de deux agents anti-mousse sur les cinétiques de dissolution de billes de cuivre dans du HNO₃ à 5 M.
La Figure 3 présente les effets de l'ajout d'un agent anti-mousse (Silfoam SRE) sur les cinétiques de dissolution de copeaux de zinc dans du HNO₃.
La Figure 4 présente les effets de l'ajout d'un agent anti-mousse (Silfoam SRE) sur les cinétiques de dissolution de granulés d'aluminium dans du HCl à 5 M.
La Figure 5 présente les effets de l'ajout d'un agent anti-mousse (Silfoam SRE) sur les cinétiques de dissolution de copeaux de zinc dans du HCl à 5 M.
La Figure 6 présente les états de surface des billes de cuivre après dissolution d'une même quantité dans du HNO₃ à 5 M. Les photographies des Figures 6A, 6B, 6C et 6D correspondent respectivement à une bille de cuivre neuve ; une bille de cuivre attaquée, pendant 30 min, par du HNO₃ à 5 M ; une bille de cuivre attaquée, pendant 2 h, par le mélange de HNO₃ à 5 M et de l'agent anti-mousse Silfoam SRE et une bille de cuivre attaquée, pendant 6,5 h, par le mélange de HNO₃ à 5 M et de silice hydrophobe.
La Figure 7 présente les états de surface des copeaux de zinc après dissolution dans du HNO₃ à 5 M. Les photographies des Figures 7A, 7B et 7C correspondent respectivement à un copeau de zinc neuf ; un copeau de zinc attaqué, pendant 1 min, par du HNO₃ à 5 M et un copeau de zinc attaqué, pendant 5 min, par le mélange de HNO₃ à 5 M et de l'agent anti-mousse Silfoam SRE.
La Figure 8 présente les états de surface des copeaux de zinc après dissolution dans du HCl à 5 M. Les photographies des Figures 8A, 8B et 8C correspondent respectivement à un copeau de zinc neuf ; un copeau de zinc attaqué, pendant 7 min, par du HCl à 5 M et un copeau de zinc attaqué, pendant 7 min, par le mélange de HCl à 5 M et de l'agent anti-mousse Silfoam SRE.
La Figure 9 présente l'effet de l'ajout d'un agent anti-mousse (Silfoam SRE) sur la dissolution de zinc dans du HCl à 5 M.
La Figure 10 présente l'effet de l'ajout d'un agent anti-mousse (Silfoam SRE) sur une dissolution ne produisant pas de réactifs gazeux.
La Figure 11 présente la dissolution différenciée en présence d'un agent anti-mousse (Silfoam SRE) selon que la réaction de dissolution produit ou non des gaz.

### EXPOSÉ DÉTAILLÉ DE MODES DE RÉALISATION PARTICULIERS

### I. Diminution de la cinétique de réactions de dissolution.

Ces expériences ont été réalisées sur différents matériaux, ainsi que dans différents acides utilisés à une concentration comprise entre 1 M et 5 M.

Seuls les couples suivants sont présentés : acide nitrique - cuivre, acide nitrique - zinc, acide nitrique - oxyde d'uranium, acide chlorhydrique - aluminium, acide chlorhydrique -zinc.

Les métaux sont introduits sous forme de poudres de l'ordre de 200 µm de diamètre, de massifs ou copeaux de l'ordre du millimètre au centimètre de diamètre, ou de plaques de l'ordre du cm², épaisses d'un millimètre. La forme sous laquelle sont introduits les métaux n'a pas influencé grandement les résultats.

Toutes les expériences ont été réalisées en bécher de 100 mL, sous agitation grâce à un barreau magnétique et à des vitesses différentes allant de 0 à 100 tours/minute, et à température ambiante. L'agitation n'a que peu d'influence sur le résultat.

Typiquement, le volume de l'essai est de 50 mL, et le métal est introduit sous forme de poudre en une quantité d'environ 0,1 à 10 g ou sous forme d'une plaque ou d'un massif de l'ordre de la dizaine de gramme chacun.

Un premier agent anti-mousse, utilisé dans l'exemple illustré sur la Figure 2, est une silice hydrophobe constituée de particules de silice silanisées. Ces particules de silice sont micrométriques et leur surface est fonctionnalisée à l'aide de groupements alkoxysilanes. Cette modification de la surface des solides a pour effet d'augmenter leur hydrophobicité.

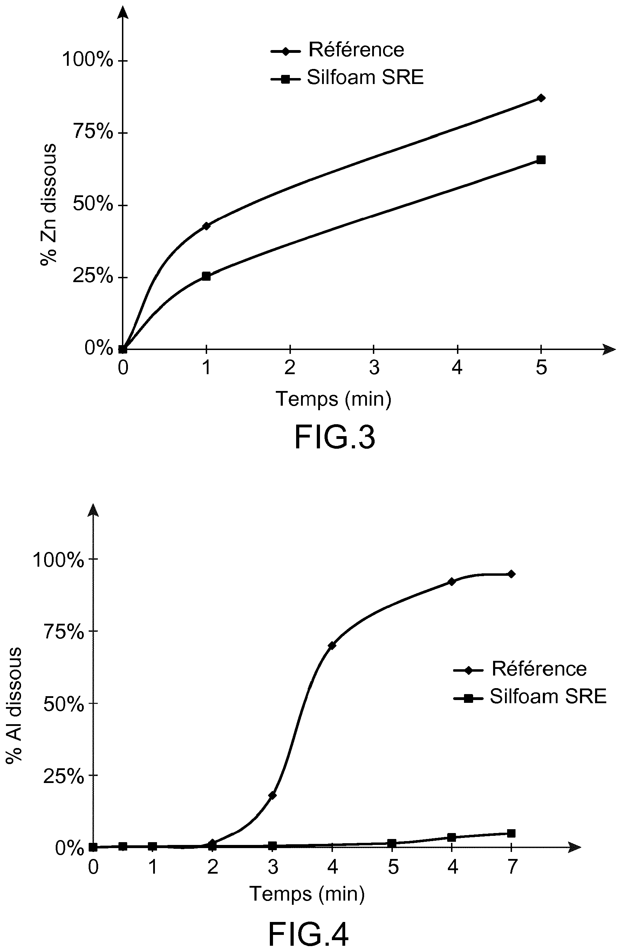

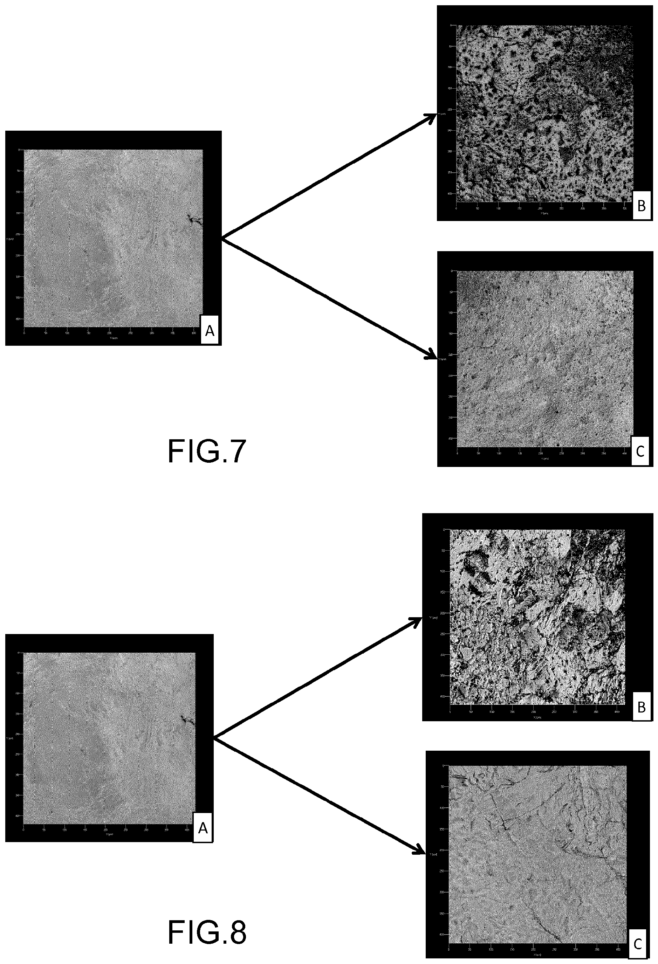

L'autre agent anti-mousse, utilisé dans les exemples illustrés sur les Figures 2 à 11 se présente sous la forme d'une émulsion à base de polydiméthylsiloxane contenant des particules solides hydrophobes sub-micrométriques, commercialisés par la société WACKER CHEMIE AG ou FLOERGER sous la marque Silfoam SRE. Un tel agent se présentant sous forme d'une suspension de nanoparticules de silicone à 33% est introduit à des concentrations de l'ordre de 0,1 g/L, soit au temps initial, soit au cours de la dissolution.

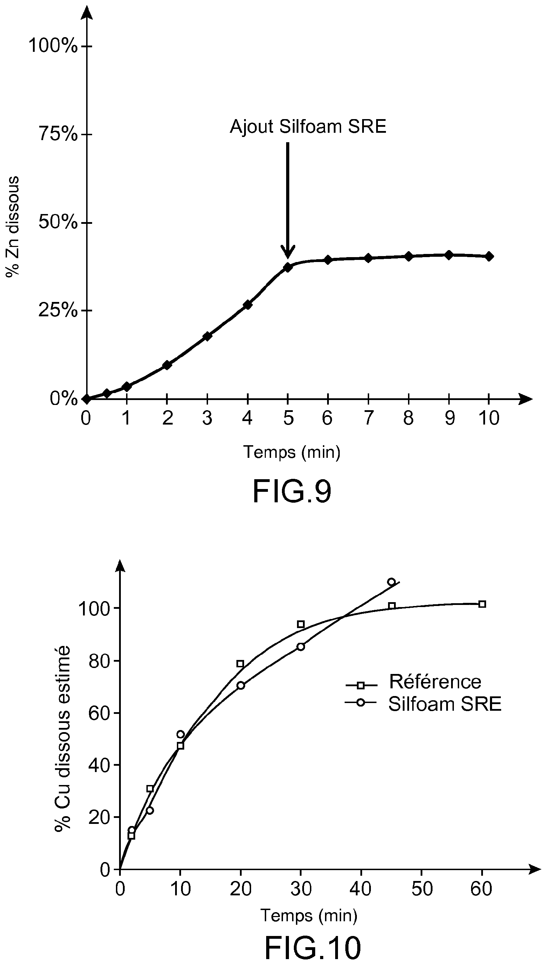

Les résultats obtenus sont présentés aux Figures 2 à 5, pour un ajout au temps initial, et Figure 9 pour un ajout au cours de la dissolution. On observe la forte chute des cinétiques de dissolution en présence des agents anti-mousse précités, comparées aux cinétiques obtenues en l'absence de ces agents (courbes « Référence »).

### II. Effets sur la surface du solide à dissoudre.

Des prélèvements de solides ont été effectués lors des expériences précédentes, et l'état de surface des solides ainsi prélevés a été observé par microscopie confocale (zoom X20) en s'assurant que l'avancement de la réaction est identique en présence ou en l'absence d'inhibition. Pour ce faire, la dissolution avec inhibiteur est prolongée sur quelques jours.

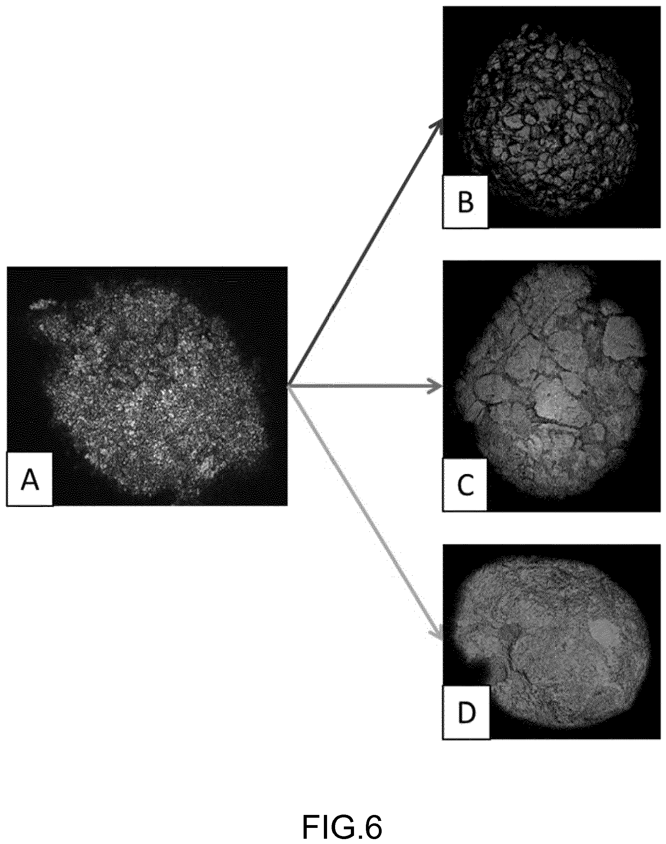

Les images obtenues sont présentées aux Figures 6 à 8. On observe très nettement un creusement de failles à la surface des solides ayant été attaqués par la solution d'acide seule (Figures 6B, 7B et 8B), alors que les états de surface des solides ayant été attaqués par un mélange d'acide et d'agent anti-mousse (Figures 6C, 6D, 7C et 8C) sont souvent plus lisses que ceux du solide initial (Figures 6A, 7A et 8A).

### III. Arrêt d'une dissolution en cours.

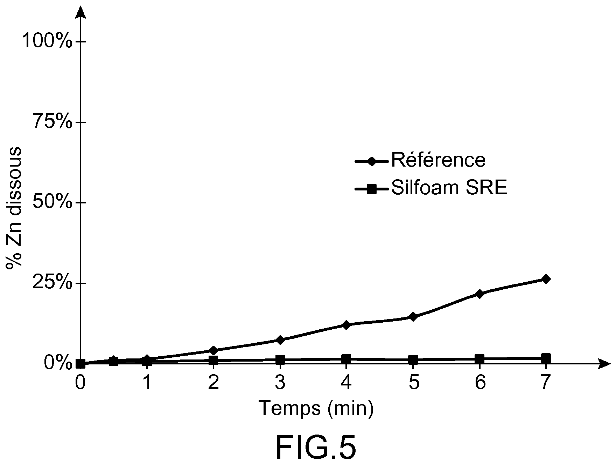

Lorsque l'agent anti-mousse (Silfoam SRE) est ajouté au cours de la dissolution, celle-ci est immédiatement arrêtée ainsi que le dégagement gazeux. La Figure 9 montre la même expérience que celle correspondant à la Figure 5.

### IV. Réaction de dissolution produisant ou non des gaz.

### IV.1. Absence d'effet sur une réaction de dissolution ne produisant pas de gaz.

Les mêmes expériences de dissolution du cuivre ont été reproduites en remplaçant la solution de dissolution à base d'acide nitrique par un mélange d'acide chlorhydrique de pH égal à 3 et de FeCl₃ à 0,1 M.

La dissolution du cuivre métallique s'effectue alors par oxydation du cuivre par le Fe(III). Les produits de réaction sont alors le Fe(II) et des complexes en solution du cuivre. Aucun gaz n'est produit.

Dans ce cas, la Figure 10 montre que l'action de l'agent anti-mousse est nulle et en fort contraste avec les résultats analogues dans le cas d'une réaction produisant des gaz, comme illustré, par exemple, à la Figure 2.

### IV.2. Exemple dans le cas d'un mélange de solides dont un des solides se dissout en produisant des gaz et l'autre se dissout en ne produisant pas de gaz.

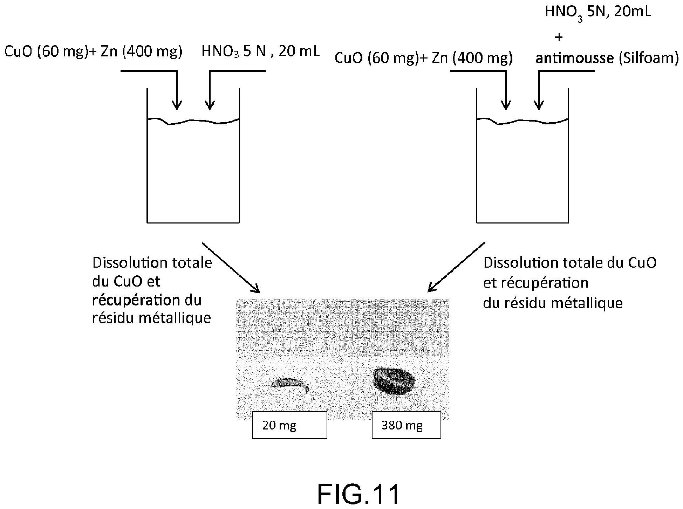

De l'oxyde de Cu(II), CuO solide, de faible granulométrie (environ 50 µm) en une quantité de 60 mg est introduit avec 400 mg d'un massif de zinc métallique dans de l'acide nitrique à 5 M, en présence ou non d'un agent anti-mousse, comme schématisé à la Figure 11. Dans cette solution, l'oxyde de cuivre se dissout sans dégagement de gaz alors que la dissolution du zinc métallique produit des gaz.

A l'issue de la dissolution totale du CuO, dans chaque cas, le solide métallique composé de Zn est récupéré. Dans le cas sans agent anti-mousse, la fraction résiduelle de Zn sur les 400 mg initiaux est de 20 mg. Dans le cas avec agent anti-mousse, la fraction résiduelle est de 380 mg sur les 400 mg initiaux. Cet exemple montre comment il est possible d'effectuer une dissolution différenciée dans un mélange de composés dont la dissolution génère ou non des gaz.

A noter que des essais à l'identique ont été menés sur les métaux vanadium, molybdène et nickel, aluminium et étain en présence d'agents anti-mousse, et ce pour différents acides minéraux : HNO₃, HCl et H₂SO₄. Ces essais ont confirmé la possibilité de ralentir la dissolution d'un métal par rapport à un autre, et ainsi de parvenir par cette sélectivité à une mise en solution préférentielle du métal recherché d'un milieu constitué de plusieurs métaux.

### RÉFÉRENCES

**[1]** VALANT, « Hétéronucléation des bulles dans des liquides sursaturés en CO2 », Résumé de la Thèse de l'Université de Marne-la-Vallée, 7 octobre 2005.
**[2]** LUBETKIN, « Why Is It Much EasierTo Nucleate Gas Bubbles than Theory Predicts? », Langmuir, vol. 19, n°7, 2003, p. 2575-2587.
**[3]** WEI et al, « Water electrolysis on carbon electrodes enhanced by surfactant », Electrochimica Acta, vol. 52, n°9, 2007, p. 3323-3329.
**[4]** TAHA, « Effect of surfactants on the rate of solid-liquid mass transfer with gas generation at the interface », Journal of colloid and interface science, vol. 275, n°1, 2004, p. 235-242.
**[5]** Demande internationale WO 2008/130592, « Process for producing hydrogen gas from sustainable biofuels or from other carbon based fuels », publiée le 30 octobre 2008.
**[6]** Demande de brevet GB 2 264 112, « Hydrogen generating composition and method of production therof », publiée le 22 mars 1995.

## Revendications

1. Procédé pour éviter, ralentir ou arrêter la dissolution d'un composé solide dans une solution de dissolution dans laquelle ledit composé solide se dissout en générant au moins un composé gazeux, caractérisé en que ladite dissolution est évitée, ralentie ou arrêtée par l'ajout, dans ladite solution de dissolution, d'au moins un agent anti-mousse choisi dans le groupe constitué par les particules solides hydrophobes, les huiles silicones, les huiles polaires et leurs mélanges et en ce que l'ajout dudit au moins un agent anti-mousse dans ladite solution de dissolution est réalisé avant la mise en contact dudit composé solide avec ladite solution de dissolution.

2. Procédé selon la revendication 1, **caractérisé en ce que** ledit composé solide est présent en mélange avec un second composé qui se dissout dans ladite solution de dissolution sans générer aucun composé gazeux, moyennant quoi l'ajout dudit agent anti-mousse dans la solution de dissolution avant la mise en contact du mélange avec ladite solution de dissolution évite, ralentit ou arrête la dissolution dudit composé solide et permet la dissolution sélective dudit second composé.

3. Procédé selon la revendication 1 ou 2, **caractérisé en ce que** lesdites particules solides hydrophobes sont naturellement hydrophobes, comme des particules solides entièrement minérales en aluminate ou en titanate.

4. Procédé selon la revendication 1 ou 2, **caractérisé en ce que** lesdites particules solides hydrophobes sont des particules solides typiquement minérales, fonctionnalisées par des groupements organiques hydrophobes.

5. Procédé selon l'une quelconque des revendications 1 à 4, **caractérisé en ce que** ladite huile silicone est un polydiméthylsiloxane dont les extrémités sont bloquées par des groupements triméthylsilyles.

6. Procédé selon l'une quelconque des revendications 1 à 5, **caractérisé en ce que** ledit ou lesdits agent(s) anti-mousse est(sont) utilisé(s) en une quantité totale comprise entre 0,01 et 30 g par litre de solution de dissolution, notamment comprise entre 0,02 et 10 g par litre de solution de dissolution et, en particulier, entre 0,05 et 5 g par litre de solution de dissolution.

7. Procédé selon l'une quelconque des revendications 1 à 6, **caractérisé en ce que** ladite solution de dissolution est une solution acide voire fortement acide ou une solution alcaline voire fortement alcaline.

8. Procédé selon l'une quelconque des revendications 1 à 7, **caractérisé en ce que** ladite solution de dissolution est choisie parmi l'acide chlorhydrique (HCI), l'acide nitrique (HNO₃), l'acide fluorhydrique (HF), l'acide sulfurique (H₂SO₄), l'acide phosphorique (H₃PO₄), leurs solutions aqueuses et leurs mélanges.

9. Procédé selon l'une quelconque des revendications 1 à 7, **caractérisé en ce que** ladite solution de dissolution est choisie parmi l'hydroxyde de sodium (NaOH), l'hydroxyde de potassium (KOH), l'hydroxyde de calcium (Ca(OH)₂), l'hydroxyde de lithium (LiOH), l'hydroxyde de césium (CsOH), leurs solutions aqueuses et leurs mélanges.

10. Procédé selon l'une quelconque des revendications 1 à 9, **caractérisé en ce que** ledit composé dont on souhaite éviter, ralentir ou arrêter la dissolution ou ledit mélange à dissoudre se présente sous forme compacte ou sous forme particulaire.

11. Procédé selon l'une quelconque des revendications 1 à 10, **caractérisé en ce que** ledit composé dont on souhaite éviter, ralentir ou arrêter la dissolution la dissolution ou ledit mélange à dissoudre est un rebut de fabrication ou produit solide provenant de la fabrication des éléments combustibles nucléaires, un produit solide provenant du traitement des combustibles nucléaires irradiés, une terre contaminée, un déchet solide d'équipements électriques ou électroniques, un déchet industriel, des composés solides issus du traitement des piles et batteries usagées, du traitement des aimants, du traitement minier ou encore un minerai.

12. Utilisation d'un procédé selon l'une quelconque des revendications 1 à 11
- lors de la dissolution d'aluminium ou d'étain métallique ;
- pour le dégraissage, le nettoyage ou le polissage de métaux;
- pour le recyclage des batteries ou piles usagées ;
- pour le recyclage et traitement des aimants permanents ; ou
- pour le traitement des minerais et résidus miniers.

## Patentansprüche

1. Verfahren zur Vermeidung, Verlangsamung oder Unterbrechung der Auflösung einer Feststoffverbindung in einer auflösenden Lösung, in der sich die Feststoffverbindung unter Erzeugung mindestens einer gasförmigen Verbindung auflöst, **dadurch gekennzeichnet, dass** die Auflösung vermieden, verlangsamt oder unterbrochen wird, indem der auflösenden Lösung mindestens ein Schaumverhütungsmittel zugegeben wird, das ausgewählt ist aus der Gruppe umfassend hydrophobe Feststoffteilchen, Silikonöle, polare Öle und deren Gemische, und dass das Zugeben des mindestens einen Schaumverhütungsmittels in die auflösende Lösung vor dem Inkontaktbringen der Feststoffverbindung mit der auflösenden Lösung erfolgt.

2. Verfahren nach Anspruch 1, **dadurch gekennzeichnet, dass** die Feststoffverbindung im Gemisch mit einer zweiten Verbindung vorliegt, die sich in der auflösenden Lösung auflöst, ohne irgendeine gasförmige Verbindung zu erzeugen, wodurch mit der Zugabe des Schaumverhütungsmittels in die auflösende Lösung vor dem Inkontaktbringen des Gemischs mit der auflösenden Lösung die Auflösung der Feststoffverbindung vermieden, verlangsamt oder unterbrochen wird und die selektive Auflösung der zweiten Verbindung ermöglicht wird.

3. Verfahren nach Anspruch 1 oder 2, **dadurch gekennzeichnet, dass** die hydrophoben Feststoffteilchen von Natur aus hydrophob sind, wie etwa vollmineralische Feststoffteilchen aus Aluminat oder Titanat.

4. Verfahren nach Anspruch 1 oder 2, **dadurch gekennzeichnet, dass** die hydrophoben Feststoffteilchen typischerweise anorganische Feststoffteilchen sind, die mit hydrophoben organischen Gruppen funktionalisiert sind.

5. Verfahren nach einem der Ansprüche 1 bis 4, **dadurch gekennzeichnet, dass** das Silikonöl ein Polydimethylsiloxan ist, das mit Trimethylsilylgruppen endblockiert ist.

6. Verfahren nach einem der Ansprüche 1 bis 5, **dadurch gekennzeichnet, dass** das bzw. die Schaumverhütungsmittel in einer Gesamtmenge zwischen 0,01 und 30 g pro Liter auflösende Lösung, insbesondere zwischen 0,02 und 10 g pro Liter auflösende Lösung und insbesondere zwischen 0,05 und 5 g pro Liter auflösende Lösung verwendet wird/werden.

7. Verfahren nach einem der Ansprüche 1 bis 6, **dadurch gekennzeichnet, dass** die auflösende Lösung eine saure bzw. stark saure Lösung oder eine alkalische bzw. stark alkalische Lösung ist.

8. Verfahren nach einem der Ansprüche 1 bis 7, **dadurch gekennzeichnet, dass** die auflösende Lösung ausgewählt ist aus Salzsäure (HCl), Salpetersäure (HNO₃), Flusssäure (HF), Schwefelsäure (H₂SO₄), Phosphorsäure (H₃PO₄), deren wässrigen Lösungen und deren Gemischen.

9. Verfahren nach einem der Ansprüche 1 bis 7, **dadurch gekennzeichnet, dass** die auflösende Lösung ausgewählt ist aus Natriumhydroxid (NaOH), Kaliumhydroxid (KOH), Calciumhydroxid (Ca(OH)₂), Lithiumhydroxid (LiOH), Cäsiumhydroxid (CsOH), deren wässrigen Lösungen und deren Gemischen.

10. Verfahren nach einem der Ansprüche 1 bis 9, **dadurch gekennzeichnet, dass** die Verbindung, deren Auflösung vermieden, verlangsamt oder unterbrochen werden soll, bzw. das aufzulösende Gemisch in kompakter oder partikulärer Form vorliegt.

11. Verfahren nach einem der Ansprüche 1 bis 10, **dadurch gekennzeichnet, dass** es sich bei der Verbindung, deren Auflösung vermieden, verlangsamt oder unterbrochen werden soll, bzw. bei dem aufzulösenden Gemisch um einen Produktionsabfall oder ein Feststoffprodukt aus der Herstellung von Brennelementen, ein Feststoffprodukt aus der Aufbereitung bestrahlter Kernbrennstoffe, kontaminierten Boden, Feststoffabfall von elektrischen oder elektronischen Geräten, Industrieabfall, Feststoffverbindungen aus der Aufbereitung von Altbatterien, aus der Aufbereitung von Magneten, aus der Aufbereitung im Bergbau oder auch um ein Erz handelt.

12. Verwendung eines Verfahrens nach einem der Ansprüche 1 bis 11
- beim Lösen von metallisches Aluminium oder Zinn;
- zum Entfetten, Reinigen oder Polieren von Metallen;
- für das Recycling von Altbatterien;
- für das Recycling und die Aufbereitung von Dauermagneten; oder
- für die Aufbereitung von Erzen und Bergbaurückständen.

## Claims

1. Method for preventing, slowing down or stopping the dissolution of a solid compound in a dissolution solution in which the solid compound dissolves by generating at least one gaseous compound, **characterized in that** the dissolution is prevented, slowed down or stopped by adding to the dissolution solution, at least one anti-foaming agent selected from the group consisting of hydrophobic solid particles, silicone oils, polar oils and mixtures thereof and **in that** the addition of said at least one anti-foaming agent to said dissolution solution is carried out before bringing said solid compound into contact with said dissolution solution.

2. Method according to claim 1, **characterized in that** said solid compound is present in mixture with a second compound which dissolves in the dissolution solution without generating any gaseous compound, whereby the addition of said anti-foaming agent to the dissolution solution before bringing the mixture into contact with said dissolution solution, prevents, slows down or stops the dissolution of said solid compound and allows said selective dissolution of said second compound.

3. Method according to claim 1 or 2, **characterized in that** said hydrophobic solid particles are naturally hydrophobic, such as fully inorganic solid aluminate or titanate particles.

4. Method according to claim 1 or 2, **characterized in that** said hydrophobic solid particles are typically mineral solid particles, functionalized with hydrophobic organic groups.

5. Method according to any one of the claims 1 to 4, **characterized in that** said silicone oil is a polydimethylsiloxane whose ends are blocked by trimethylsilyl groups.

6. Method according to any one of the claims 1 to 5, **characterized in that** said anti-foaming agent(s) is/are used in a total amount between 0.01 and 30 g per liter of dissolution solution, especially between 0.02 and 10 g per liter of dissolution solution and, in particular, between 0.05 and 5 g per liter of dissolution solution.

7. Method according to even any one of the claims 1 to 6, **characterized in that** said dissolution solution is an acid or even strongly acid solution, or an alkaline or even strongly alkaline solution.

8. Method according to even any one of the claims 1 to 7, **characterized in that** said dissolution solution is chosen from hydrochloric acid (HCI), nitric acid (HNO₃), hydrofluoric acid (HF), sulfuric acid (H₂SO₄), phosphoric acid (H₃PO₄), their aqueous solutions and mixtures thereof.

9. Method according to any one of the claims 1 to 7, **characterized in that** said dissolution solution is selected from sodium hydroxide (NaOH), potassium hydroxide (KOH), calcium hydroxide (Ca(OH)₂), lithium hydroxide (LiOH), cesium hydroxide (CsOH), their aqueous solutions and mixtures thereof.

10. Method according to any one of the claims 1 to 9, **characterized in that** said compound whose dissolution it is desired to prevent, slow down or stop or said mixture to be dissolved is in compact form or in particulate form.

11. Method according to any one of the claims 1 to 10, **characterized in that** said compound whose dissolution it is desired to prevent, slow down or stop or said mixture to be dissolved is production waste or a solid product from the production of nuclear fuel elements, a solid product derived from the treatment of irradiated nuclear fuel, contaminated soil, solid waste from electrical or electronic equipment, industrial waste, solid compounds from the treatment of used cells and batteries, the treatment of magnets, mining treatment or even ore.

12. Use of a method according to any one of the claims 1 to 11
- during the dissolution of metallic aluminum or tin;
- for degreasing, cleaning or polishing metals;
- for recycling used cells or batteries;
- for recycling and treatment of permanent magnets; or
- for the treatment of ores and mine wastes.
